# DEMANDE DE BREVET EUROPEEN

(11) **EP 2 824 519 A1**
(43) Date de publication de la demande: **14.01.2015**
(21) Numéro de dépôt: 13176030.8
(22) Date de dépôt: 11.07.2013
(51) Int. Cl.: G04C 3/14, H02K 1/14, H02K 15/095

(54) **Moteur monophasé du type horloger**

(71) Demandeur: ETA SA Manufacture Horlogère Suisse, 2540 Grenchen (CH)
(72) Inventeur: Lagorgette, Pascal, 2502 Bienne (CH); Balmer, Raphaël, 2830 Courrendlin (CH); Maridor, Joel, 2000 Neuchâtel (CH)
(74) Mandataire: Surmely, Gérard

(57) **Abrégé**

L'invention concerne un procédé de fabrication d'un moteur monophasé du type horloger comprend les étapes suivantes :
A) usinage d'un stator monobloc de manière qu'il comprenne une branche ou plusieurs branches définissant respectivement un noyau ou plusieurs noyaux, que ses deux épanouissements polaires soient séparés par une zone vide ayant une largeur minimale qui est supérieure à la largeur prédéfinie d'un guide-fil d'une tête de bobinage, et qu'un espace libre avec une largeur supérieure à cette largeur minimale soit laissé dans une zone adjacente au noyau ou aux noyaux en s'étendant sur toute leur longueur, la zone vide et l'espace libre définissant ensemble un canal ayant sensiblement ladite largeur minimale sur toute la longueur du noyau ou des noyaux;
B) formation de la bobine ou des plusieurs bobines respectivement autour du noyau ou des noyaux avec la tête de bobinage tournant de manière que le guide-fil traverse perpendiculairement le canal.

## Description

### Domaine technique

La présente invention concerne le domaine des moteurs du type horloger, en particulier les moteurs monophasés ayant un rotor à aimant permanent.

### Arrière-plan technologique

Dans le domaine des moteurs horlogers, les moteurs du type Lavet sont connus depuis longtemps. Ces moteurs sont monophasés avec un rotor à aimant permanent bipolaire agencé dans un trou d'un stator s'étendant dans un plan. De manière classique, le stator se compose d'une plaquette en matériau magnétique, définissant deux pôles statoriques dont les deux épanouissements polaires respectifs entourent le trou du rotor et sont séparés par deux isthmes, et d'un noyau de bobine distinct qui est fixé à la plaquette une fois une bobine montée autour de ce noyau.

Pour simplifier la production de moteurs monophasés du type horloger, on a prévu des configurations avec un stator monobloc (incluant le ou les noyaux). Plusieurs documents, notamment les documents US 4,095,130, US 4,565,955 et EP 1 544 693, proposent un stator monobloc ayant une forme générale en U avec des isthmes largement ouverts. Dans tous les cas, il est prévu d'introduire une bobine préformée au travers du trou pour le rotor. On remarquera qu'il ne s'agit plus ici d'un trou fermé ou juste fendu au niveau des isthmes, mais plutôt de deux évidements dans les parties d'extrémité libres des deux branches du stator en U. En effet, pour permettre de monter une bobine préformée sur une branche du stator, il est prévu dans chacun de ces trois documents une même configuration, à savoir que la partie d'extrémité de la branche formant noyau présente une largeur maximale, selon une direction perpendiculaire à la direction longitudinale du noyau, égale à la largeur du noyau. Ainsi il est possible d'enfiler la bobine préformée sur la branche en question. Comme la bobine, pour avoir une section cuivre suffisante, présente une épaisseur relativement importante au niveau de l'enroulement du fils électrique isolé, le passage de cette bobine entre les deux branches du stator requière que la distance séparant celles-ci soit au moins aussi large que l'épaisseur susmentionnée.

On a donc deux limitations dans la configuration du stator monobloc : la largeur maximale pour le pôle statorique qui doit passer dans l'ouverture centrale de la bobine, et la distance minimale entre les deux extrémités libres des deux branches respectives du stator. En particulier dans la version pas-à-pas d'un moteur monophasé, il est nécessaire d'avoir au moins deux positions de repos (énergie minimale) pour le rotor hors de l'axe parallèle aux deux branches. Pour ce faire, comme cela ressort particulièrement des documents US 4,095,130 et US 4,565,955, les évidements dans les deux extrémités des deux branches respectives du stator doivent être relativement profonds, ce qui augmente considérablement la distance entre l'aimant permanent du rotor et les épanouissement polaires. Le couplage aimant-bobine est donc diminué par une telle configuration et ainsi le couple fourni par le moteur n'est pas optimal.

### Résumé de l'invention

La présente invention a pour but de trouver une solution au problème susmentionné concernant les moteurs monophasés du type horloger avec un stator monobloc, en proposant un moteur monophasé peu onéreux dont les performances sont supérieures à celles des moteurs de l'art antérieur mentionné précédemment.

A cet effet, la présente invention a pour objet un procédé de fabrication d'un moteur monophasé comprenant un rotor à aimant permanent bipolaire, une bobine et un stator monobloc ; ce procédé étant défini à la revendication 1 du jeu de revendications joint à la présente description de l'invention. La présente invention a aussi pour objet un moteur monophasé dont la configuration particulière est possible grâce au procédé de fabrication de l'invention.

Le procédé de fabrication selon l'invention est remarquable en ce que le stator monobloc ne limite pas l'agencement des épanouissements polaires à une configuration où chaque noyau de bobine doit être aligné avec un épanouissement polaire dont la largeur ne doit pas excéder celle du noyau, comme l'impose les moteurs de ce type de l'art antérieur. Ainsi, la présente invention permet de dissocier la largeur du noyau de bobine de celle de l'épanouissement polaire qui le prolonge. En particulier, le noyau a une largeur inférieure à celle de cet épanouissement polaire. De plus, le noyau ne doit pas être aligné à cet épanouissement polaire correspondant, de sorte que la zone de séparation entre les épanouissements polaires n'est pas imposée par la l'épaisseur de la bobine et de son support éventuel. En particulier, l'épaisseur de la bobine et de son support éventuel, dans le plan général du stator, est supérieure à la largeur minimale de la zone de séparation susmentionnée.

D'autres caractéristiques particulières et avantages de l'invention ressortiront de la description détaillée qui suit.

### Brève description des dessins

L'invention sera décrite ci-après à l'aide de dessins annexés, donnés à titre d'exemples nullement limitatifs, dans lesquels :
- La Figure 1 est une vue en perspective d'un premier mode de réalisation d'un moteur monophasé du type horloger selon l'invention, le rotor n'ayant pas été représenté dans cette vue ;
- La Figure 2 est une vue de dessus du premier mode de réalisation ;
- La Figure 3 est une vue de dessus du stator monobloc du premier mode de réalisation ;
- La Figure 4 est une vue schématique de dessus d'un deuxième mode de réalisation d'un moteur selon l'invention ; et
- La Figure 5 est une vue montrant la formation de la deuxième bobine du premier mode de réalisation selon le procédé de fabrication de l'invention.

### Description détaillée de l'invention

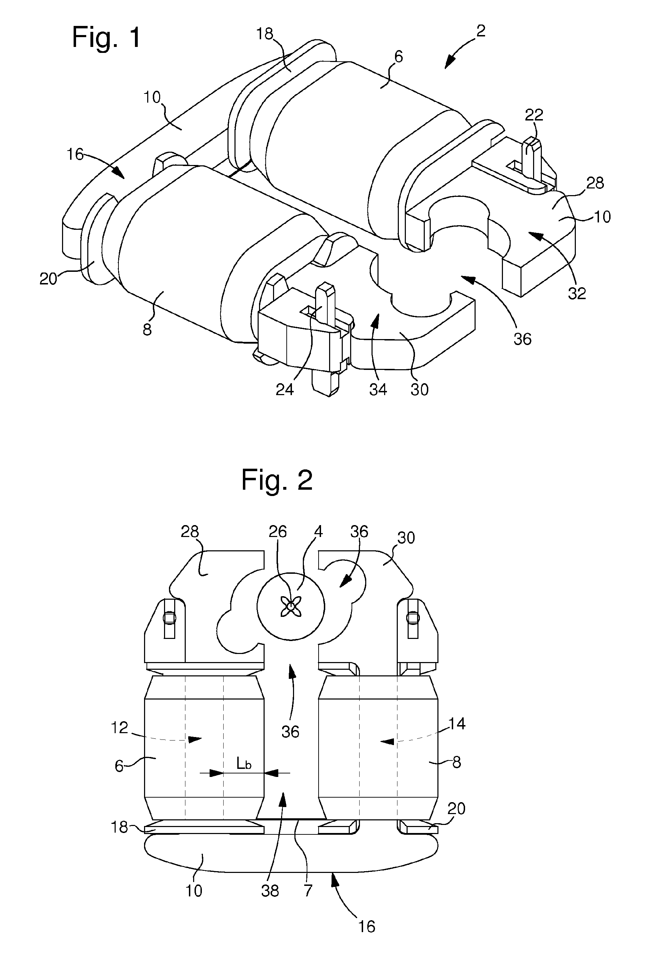

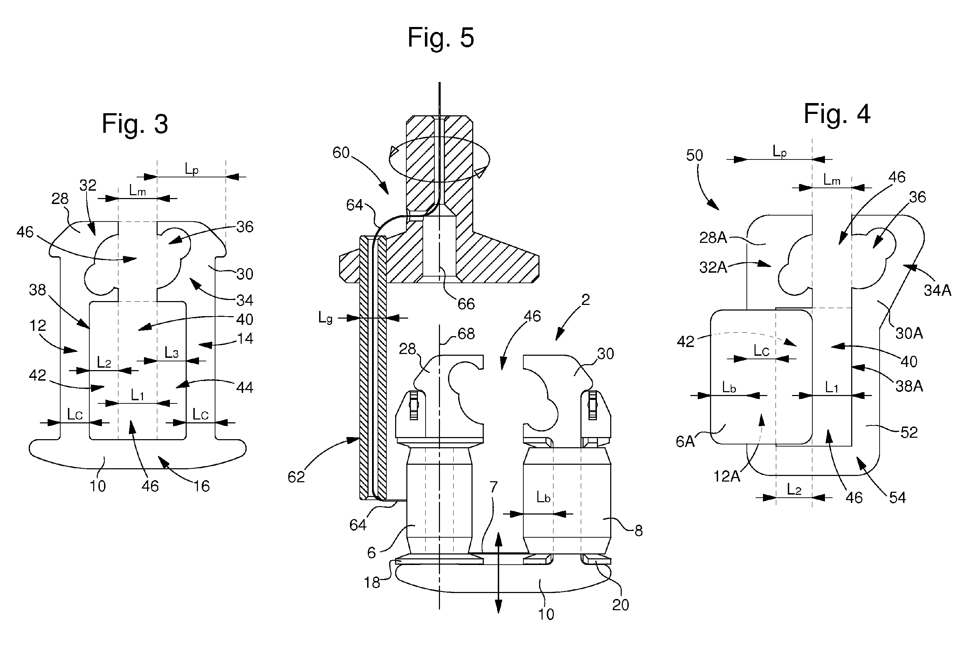

A l'aide des Figures 1 à 3, on décrira ci-après un premier mode de réalisation d'un moteur monophasé selon l'invention et, à l'aide de la Figure 5, le procédé de fabrication d'un tel moteur. Ce moteur monophasé 2 comprenant un rotor à aimant permanent bipolaire 4 (représenté seulement à la Figure 2), une première bobine 6 et une deuxième bobine 8 agencées en série. Ces bobines sont reliées par un tronçon 7 de fils électrique isolé. Le stator monobloc 10 de ce moteur comprend un premier noyau 12 et un deuxième noyau 14 qui sont parallèles l'un à l'autre et agencés en série. Les noyaux 12 et 14 sont formés par des branches rectilignes et sont reliés par une partie intermédiaire 16. On remarquera que les deux bobines sont montées sur des supports de bobine respectifs 18 et 20 qui sont respectivement clipsés aux deux noyaux. La direction de montage de ces supports est donc perpendiculaire au plan général du stator monobloc. Deux éléments métalliques 22 et 24 sont agencés au travers de chacun des supports de manière à recevoir d'un côté respectivement les deux extrémités du fil électrique, formant les deux bobines en série, et de l'autre côté permettre une liaison électrique de ces deux extrémités à un circuit électrique du mouvement horloger électronique.

Le stator monobloc 10 s'étend substantiellement dans un plan géométrique perpendiculaire à l'axe de rotation 26 du rotor 4 et il définit deux pôles statoriques 28 et 30 qui s'étendent respectivement depuis les deux extrémités de la série de deux noyaux 12 et 14. Ces deux pôles statoriques définissent respectivement deux épanouissements polaires 32 et 34 séparés entièrement par une zone de séparation 36 présentant une largeur minimale Lm (Figure 3) et dans laquelle est situé au moins partiellement l'aimant permanent 4. On notera que dans ce premier mode de réalisation, les deux pôles statoriques et les deux épanouissements polaires sont substantiellement confondus.

La zone de séparation 36 est prolongée du côté des noyaux par une ouverture 38 du stator qui est située entre ces noyaux et qui s'étend sur toute leur longueur, cette ouverture ayant une première zone 40 avec une largeur L1 sensiblement égale à la largeur minimale Lm de la zone de séparation et, entre cette première zone et les deux noyaux, respectivement une deuxième zone 42, ayant une largeur L2 sensiblement égale à l'épaisseur Lb de la première bobine 6, et une troisième zone 44 ayant une largeur L3 sensiblement égale à l'épaisseur Lb de la deuxième bobine 8 (on notera que, dans la variante représentée, les deux bobines ont sensiblement la même épaisseur; mais ceci est un exemple non limitatif). On remarquera que, dans ce premier mode de réalisation, l'ouverture 48 comporte donc trois régions : une région centrale, correspondant à la première zone 40, et deux régions latérales correspondant respectivement aux deuxième et troisième zones susmentionnées et respectivement adjacentes aux premier et deuxième noyaux. Dans une autre variante, les épaisseurs des deux bobines peuvent être respectivement inférieures aux largeurs L2 et L3 des deuxième et troisième zones.

La zone de séparation et la première zone définissent ensemble un canal 46 ayant sensiblement la largeur minimale Lm sur toute leur longueur. En l'absence du rotor, ce canal est entièrement libre dans le moteur 2. Dans le premier mode de réalisation décrit ici, chaque noyau 12, respectivement 14 a une largeur Lc inférieure à la largeur maximale Lp de chacun des deux épanouissements statoriques (lesquels ont de manière non limitative une même largeur maximale dans le premier mode de réalisation tel que représenté aux Figures 1 à 3).

A la Figure 4 est représenté un deuxième mode de réalisation d'un moteur 50 selon l'invention. Ce deuxième mode se distingue du premier mode principalement par le fait qu'il comprend un seul noyau 12A et une seule bobine 6A enroulée autour de ce noyau. Le stator monobloc 52 présente deux pôles statoriques 28A et 30A qui s'étendent respectivement depuis les deux extrémités du noyau 6A. Le premier pôle statorique est formé substantiellement par l'épanouissement polaire 32A qui a une largeur maximale Lp dans une direction perpendiculaire à la direction longitudinale de la branche rectiligne formant le noyau. Le second pôle statorique 30A est formé par un bras 54 avec un coude sensiblement à 90° et par un épanouissement polaire 34A prolongeant l'extrémité du bras 54 opposée au noyau. Les deux épanouissements polaires définissent entre eux une zone de séparation 36 semblable à celle du premier mode de réalisation. En particulier la zone de séparation présente une largeur minimale Lm dans ladite direction perpendiculaire. Cette zone de séparation est prévue pour le rotor (non représenté) du moteur 50. Elle définit en particulier deux grandes encoches de positionnement de l'aimant permanent du rotor.

Le stator 52 présente une ouverture 38A qui prolonge la zone de séparation 36 du côté du noyau 12A et qui s'étend sur toute sa longueur, cette ouverture ayant une première zone 40 avec une largeur L1 sensiblement égale à la largeur minimale Lm de la zone de séparation et, entre cette première zone et le noyau, une deuxième zone 42 ayant une largeur L2 sensiblement égale à l'épaisseur Lb de la bobine 6A. La zone de séparation et la première zone définissant ensemble un canal 46 ayant sensiblement ladite largeur minimale sur toute leur longueur, comme dans le premier mode de réalisation.

En référence aux Figures 3 à 5, le procédé de fabrication d'un moteur monophasé selon l'invention est exposé par la suite. Ce procédé est mis en oeuvre pour la fabrication de moteurs monophasés comprenant un rotor à aimant permanent bipolaire, une bobine 6A ou plusieurs bobines 6 et 8 et un stator monobloc 10, respectivement 52. Ce stator monobloc comprend un noyau 12A ou plusieurs noyaux 12, 14 agencés en série respectivement pour la bobine ou les plusieurs bobines, le stator monobloc s'étendant substantiellement dans un plan géométrique perpendiculaire à l'axe de rotation du rotor et définissant deux pôles statoriques 28 et 30, respectivement 28A et 30A qui s'étendent respectivement depuis les deux extrémités du noyau ou de la série de noyaux.

Selon un premier mode de mise en oeuvre, le procédé de fabrication selon l'invention comprenant les étapes suivantes :
A) usinage d'un stator monobloc 10, 52 de manière qu'il comprenne une branche ou plusieurs branches définissant respectivement le noyau 12A ou les plusieurs noyaux 12 et 14, que les deux pôles statoriques présentent respectivement deux épanouissements polaires 32 et 34, respectivement 32A et 34A séparés par une zone vide 36, cette zone vide ayant une largeur minimale Lm qui est supérieure à la largeur prédéfinie Lg d'un guide-fil 62 d'une tête de bobinage 60, et qu'un espace libre 38, respectivement 38A avec une largeur supérieure à cette largeur minimale soit laissé dans une zone adjacente au noyau ou aux plusieurs noyaux, cet espace libre prolongeant la zone vide et s'étendant sur toute la longueur de ce noyau ou de ces plusieurs noyaux, cet espace libre définissant une première zone 40 avec une largeur L1 sensiblement égale à la largeur minimale Lm de la zone vide et, entre cette première zone et le noyau 12 ou 12A, une deuxième zone 42 avec une largeur L2 sensiblement égale ou supérieure à l'épaisseur finale Lb de la bobine prévue autour de ce noyau, la zone vide 36 et la première zone 40 définissant ensemble un canal 46 ayant sensiblement la largeur minimale Lm sur toute leur longueur;
B) formation de la bobine 6A ou des bobines 6 et 8 autour du noyau ou des noyaux à l'aide d'une installation comprenant la tête de bobinage 60 munie du guide-fil 62 qui fournit un fil électrique isolé 64, cette tête de bobinage étant montée dans l'installation de manière à tourner autour d'un axe central 66 lors du bobinage, l'extrémité du guide-fil décrivant alors un cercle, le stator 10 , 52 étant positionné relativement à la tête de bobinage de manière que le guide-fil traverse perpendiculairement le canal 46 lors de la formation de la bobine ou des bobines, le stator monobloc étant soumis lors d'un bobinage à un mouvement de translation relativement à la tête de bobinage (Fig. 5);
C) montage du rotor de manière que l'aimant permanent du rotor soit situé entre les deux épanouissements polaires.

Selon une première variante, l'axe central 66 autour duquel tourne la tête de bobinage 60 est sensiblement confondu avec l'axe longitudinal central 68 du noyau autour duquel la bobine en formation 6 est formée (Fig. 5). Toutefois, on notera qu'il est possible de prévoir un décalage entre les deux axes 66 et 68 en décalant l'axe central 66 vers l'extérieur du stator tout en ayant une tête de bobinage agencée pour que le guide-fil passe dans le canal 46 lors du bobinage. Ceci permet de décrire un cercle plus grand avec l'extrémité du guide-fil et ainsi d'avoir une section de bobine non circulaire sur ses deux côtés, en particulier dans le cas de côtés présentant un méplat central qui s'étend de part et d'autre du plan général du stator sur une certaine hauteur. Une telle configuration intervient en l'absence d'un support de bobine avec un noyau de section sensiblement rectangulaire ou dans le cas d'un support de bobine avec des côtés présentant un méplat.

Selon une deuxième variante préférée, la largeur minimale Lm de la zone vide 36 est prévue égale à la largeur prédéfinie Lg du guide-fil 62 augmentée des diverses tolérances intervenant dans le système « tête de bobinage en rotation - stator du moteur monophasé » ; ceci afin de minimiser cette largeur minimale. On comprend alors que le canal 46 doit avoir au moins cette largeur minimale sur toute sa longueur pour permettre au guide-fil passer au travers de ce canal. Dans cette variante préférée, comme le canal doit rester vide jusqu'à la formation complète de chaque bobine, on remarquera que la ou les bobines ne doivent pas s'étendre en partie dans ce canal.

Selon un deuxième mode de mise en oeuvre du procédé de fabrication de l'invention, il est prévu que le stator monobloc tourne sensiblement autour de l'axe longitudinal central 68 alors que le guide-fil demeure dans une position angulaire fixe. Ce qui importe, c'est le mouvement de rotation relatif entre la tête de bobinage et le stator monobloc. Ainsi, de manière générale, la tête de bobinage et le stator monobloc sont montés dans l'installation de bobinage de manière que l'un tourne relativement à l'autre lors de la formation de la bobine, le guide-fil traversant à chaque tour le canal 46 selon une direction sensiblement perpendiculaire et le stator monobloc étant soumis à un mouvement de translation relativement à la tête de bobinage. Comme pour la rotation, il s'agit donc d'une translation relative.

Selon la variante représentée à la Figure 5, il est prévu de former deux bobines 6 et 8 respectivement autour de deux noyaux parallèles 12 et 14. Ces premier et deuxième noyaux sont situés de part et d'autre de l'espace libre 38 prolongeant la zone vide 36. Cet espace libre est composé d'une région centrale correspondant à la première zone 40, d'une première région latérale correspondant à la deuxième zone 42 et d'une deuxième région latérale définie par la troisième zone 44, ces deux régions latérales étant situées respectivement des deux côtés de la région centrale 40 et étant respectivement adjacentes aux premier et deuxième noyaux 12 et 14. La largeur L3 de la deuxième région latérale étant prévue égale ou supérieure à l'épaisseur Lb de la seconde bobine 8.

Dans cette dernière variante, il est prévu de former une première bobine 8 avec la tête de bobinage 60 en positionnant correctement son axe central 66 relativement au noyau 14 et au canal 46. Une fois cette première bobine réalisée, on déplace le stator 10 perpendiculairement à l'axe central 66 et on positionne la tête de bobinage correctement relativement au noyau 12 autour duquel il est prévu de réaliser la seconde bobine 6. Ensuite, on fait tourner la tête de bobinage dans le sens contraire à celui prévu lors de la formation de la première bobine. Lors du déplacement du stator perpendiculairement à l'axe central 66, on réalise la liaison électrique 7 entre les deux bobines. On remarquera que la Figure 5 montre la tête de bobinage lors de la formation de la bobine 6 intervenant, dans le cas représenté, après la formation de la bobine 8.

## Revendications

1. Procédé de fabrication d'un moteur monophasé (2; 50) comprenant un rotor à aimant permanent bipolaire (4), une bobine (6, 6A) et un stator monobloc (10; 52), ce dernier comprenant un noyau (12, 12A) pour la bobine, le stator monobloc s'étendant substantiellement dans un plan géométrique perpendiculaire à l'axe de rotation du rotor et définissant deux pôles statoriques (28,30; 28a,30a), ce procédé de fabrication comprenant les étapes suivantes :
A) usinage dudit stator monobloc de manière qu'il comprenne une branche définissant le noyau, que les deux pôles statoriques présentent respectivement deux épanouissements polaires (32,34; 32a,34a) séparés par une zone vide (36), cette zone vide ayant une largeur minimale (Lm) qui est supérieure à la largeur prédéfinie (Lg) d'un guide-fil (62) d'une tête de bobinage (60), et qu'un espace libre (38; 38A) avec une largeur supérieure à cette largeur minimale soit laissé dans une zone adjacente au noyau en s'étendant sur toute la longueur de ce noyau, cet espace libre prolongeant ladite zone vide et ayant au moins une première zone (40) avec une largeur (L1) sensiblement égale à la largeur minimale de la zone vide et, entre cette première zone et ledit noyau, une deuxième zone (42) avec une largeur (L2) sensiblement égale ou supérieure à l'épaisseur (Lb) de la bobine prévue, la zone vide et la première zone définissant ensemble un canal (46) ayant ladite largeur minimale sur toute leur longueur ;
B) formation de la bobine autour dudit noyau à l'aide d'une installation comprenant ladite tête de bobinage munie dudit guide-fil qui fournit un fil électrique isolé (64), cette tête de bobinage et ledit stator monobloc étant montés dans l'installation de manière que l'un tourne relativement à l'autre lors de la formation de la bobine, le guide-fil traversant à chaque tour ledit canal selon une direction sensiblement perpendiculaire et le stator monobloc étant soumis à un mouvement de translation relativement à la tête de bobinage ;
C) montage dudit rotor de manière que ledit aimant permanent soit situé entre les deux épanouissements polaires.

2. Procédé de fabrication selon la revendication 1, **caractérisé en ce que** la tête de bobinage tourne autour d'un axe central (66) qui est sensiblement confondu avec l'axe longitudinal central (68) du noyau autour duquel la bobine en formation est réalisée.

3. Procédé de fabrication selon la revendication 1 ou 2, **caractérisé en ce que** ladite largeur minimale (Lm) de ladite zone vide (36) est prévue égale à ladite largeur prédéfinie (Lg) dudit guide-fil augmentée des diverses tolérances intervenant dans le système « tête de bobinage en rotation - stator du moteur monophasé ».

4. Procédé de fabrication selon l'une quelconque des revendications précédentes et dans lequel ladite bobine est une première bobine et ledit noyau est un premier noyau, **caractérisé en ce qu'il** est prévu d'agencer une seconde bobine (8) sur un deuxième noyau (14) du stator monobloc, ces premier et deuxième noyaux étant agencés en série et situés respectivement des deux côtés dudit espace libre (38) prolongeant ladite zone vide (36), et **en ce que** cet espace libre présente trois régions :
- une région centrale correspondant à ladite première zone (40),
- une première région latérale, correspondant à ladite deuxième zone (42), et une deuxième région latérale (44) situées respectivement des deux côtés de la région centrale et respectivement adjacentes aux premier et deuxième noyaux, la largeur (L3) de la deuxième région latérale étant sensiblement égale ou supérieure à l'épaisseur de la seconde bobine.

5. Moteur monophasé (2; 50) comprenant un rotor à aimant permanent bipolaire (4), une bobine (6A) ou plusieurs bobines (6,8) et un stator monobloc (10; 52), ce dernier comprenant un noyau (12A) ou plusieurs noyaux (12,14) agencés en série respectivement pour la bobine ou les plusieurs bobines, le stator monobloc s'étendant substantiellement dans un plan géométrique perpendiculaire à l'axe de rotation du rotor et définissant deux pôles statoriques (28,30; 28a,30a) qui s'étendent respectivement depuis les deux extrémités du noyau ou de la série de noyaux, ces deux pôles statoriques définissant respectivement deux épanouissements polaires (32,34; 32a,34a) séparés entièrement par une zone de séparation (36) présentant une largeur minimale (Lm) non nulle et dans laquelle est situé au moins partiellement ledit aimant permanent bipolaire, **caractérisé en ce que** ladite zone de séparation est prolongée du côté dudit noyau ou des plusieurs noyaux par une ouverture (38; 38A) du stator adjacente à ce noyau ou ces noyaux et s'étendant sur toute sa/leur longueur, cette ouverture ayant au moins une première zone (40) avec une largeur (L1) sensiblement égale à la largeur minimale de la zone de séparation et, entre cette première zone et ledit noyau (12A) ou un premier (12) des plusieurs noyaux, une deuxième zone (42) ayant une largeur (L2) sensiblement égale ou supérieure à l'épaisseur (Lb) de la bobine correspondante, la zone de séparation et la première zone définissant ensemble un canal (46) ayant sensiblement ladite largeur minimale sur toute leur longueur.

6. Moteur monophasé selon la revendication 5, **caractérisé en ce que** ledit noyau ou premier noyau a une largeur (Lc) inférieure à la largeur maximale (Lp) de chacun des deux épanouissements statoriques.

7. Moteur monophasé selon la revendication 5 ou 6, dans lequel il est prévu une première bobine (6) et une seconde bobine (8) en série agencées respectivement autour d'un premier noyau (12) et d'un deuxième noyau (14) en série du stator monobloc, **caractérisé en ce que** ladite ouverture (38) est située entre ces premier et deuxième noyaux, et **en ce que** cette ouverture présente trois régions :
- une région centrale correspondant à ladite première zone (40),
- une première région latérale, correspondant à ladite deuxième zone (42), et une deuxième région latérale (44) situées respectivement des deux côtés de la région centrale et respectivement adjacentes aux premier et deuxième noyaux, la largeur de la deuxième région latérale étant sensiblement égale ou supérieure à l'épaisseur de la seconde bobine.
